# EUROPEAN PATENT APPLICATION

(11) **EP 3 620 236 A1**
(43) Date of publication of application: **11.03.2020**
(21) Application number: 19168210.3
(22) Date of filing: 09.04.2019
(51) Int. Cl.: B05B 12/12, B29C 64/00, B41J 3/407, G01B 11/24, G06T 7/00, H04N 1/00, B05B 13/04

(54) **AUTOMATICALLY COLORING METHOD FOR 3D PHYSICAL MODEL**

(30) Priority: 04.09.2018 CN 201811025177
(71) Applicant: XYZprinting, Inc., New Taipei City 22201 (TW); Kinpo Electronics, Inc., New Taipei City 22201 (TW)
(72) Inventor: LEE, Yang-Teh, 22201 New Taipei City (TW); CHANG, Tsan-Ming, 22201 New Taipei City (TW)
(74) Representative: 2K Patentanwälte Blasberg Kewitz & Reichel

(57) **Abstract**

An automatically coloring method for 3D physical model is provided. The method is to control a 3D coloring apparatus (4) to execute 3D scanning and a modeling process on a 3D physical model placed on a movable carrier platform (43) for generating scanning object data via a 3D scanning module (41), generate data for controlling coloring and data for controlling carrier platform associated with each other according to color distribution data and the scan object data, control the movable carrier platform (43) to change a spatial position of the 3D physical model (50) according to the data for controlling carrier platform, and control a coloring module (42) to color a plurality of viewing surfaces of the 3D physical model (50). Therefore, automatically executing a coloring process on the 3D physical model can be achieved, and the artificial coloring can be replaced as well.

## Description

### BACKGROUND OF THE INVENTION

### Field of the Invention

The technical field relates to 3D physical model and more particularly related to automatically coloring method for 3D physical model.

### Description of Related Art

In the 3D printing technology of the related art, a user can design a 3D virtual object by himself/herself, and obtain a 3D physical model by using a 3D printer to print the 3D virtual object. Moreover, there are color 3D printers having an ability of printing a color 3D physical model currently, however, above color 3D printers are not popular because of higher cost and larger volume. Above situation make the primary color 3D printers without an ability of color 3D printing be the mainstream on the market currently. The color of the 3D physical model manufactured by above primary color 3D printers is the same as the primary color of printing materials.

For obtaining the color 3D physical model, in the related art, the user must paint the primary color 3D physical model manually after completion of printing the primary color 3D physical model, such that a lot of labor and time are wasted on painting.

Accordingly, there is currently a need for a schema of painting the primary color 3D physical model automatically.

### SUMMARY OF THE INVENTION

The present disclosed example is directed to an automatically coloring method for 3D physical model, the method has an ability of recognizing a shape of a 3D physical model and coloring it accurately and automatically.

One of the exemplary embodiments, An automatically coloring method for 3D physical model, the automatically coloring method for 3D physical model is applied to a 3D coloring apparatus, the 3D coloring apparatus comprises a 3D scanning module, a coloring module and a movable carrier platform, the automatically coloring method for 3D physical model comprises following steps: controlling the 3D scanning module to execute 3D scanning on a 3D physical model placed on the movable carrier platform for generating scanning data; generating scanning object data used to describe a shape of a 3D virtual object according to the scanning object data, wherein the 3D virtual object corresponds to the 3D physical model; generating data for controlling coloring and data for controlling carrier platform associated with each other according to color distribution data and the scanning object data; and controlling the movable carrier platform to change a spatial position of the 3D physical model according to the data for controlling carrier platform, and controlling the coloring module to color a plurality of viewing surfaces of the 3D physical model according to the data for controlling coloring.

The present disclosed example can automatically execute a coloring process on the 3D physical model and can achieve that replacing the artificial coloring with automatic coloring.

### BRIEF DESCRIPTION OF DRAWING

The features of the present disclosed example believed to be novel are set forth with particularity in the appended claims. The present disclosed example itself, however, may be best understood by reference to the following detailed description of the present disclosed example, which describes an exemplary embodiment of the present disclosed example, taken in conjunction with the accompanying drawings, in which:
Fig. 1 is an architecture diagram of a 3D printing coloring system according to one embodiment of the present disclosed example;
Fig. 2 is a flowchart of an automatically coloring method according to a first embodiment of the present disclosed example;
Fig. 3A is a first part of a flowchart of an automatically coloring method according to a second embodiment of the present disclosed example;
Fig. 3B is a second part of a flowchart of an automatically coloring method according to a second embodiment of the present disclosed example;
Fig. 4 is a flowchart of slicing process and 3D printing according to a third embodiment of the present disclosed example;
Fig. 5A is a schematic view of 3D scanning according to a first aspect of the present disclosed example;
Fig. 5B is a schematic view of 3D coloring according to a first aspect of the present disclosed example;
Fig. 6A is a schematic view of 3D scanning according to a second aspect of the present disclosed example; and
Fig. 6B is a schematic view of 3D coloring according to a second aspect of the present disclosed example.

### DETAILED DESCRIPTION OF THE INVENTION

In cooperation with attached drawings, the technical contents and detailed description of the present disclosed example are described thereinafter according to a preferable embodiment, being not used to limit its executing scope. Any equivalent variation and modification made according to appended claims are all covered by the claims claimed by the present disclosed example.

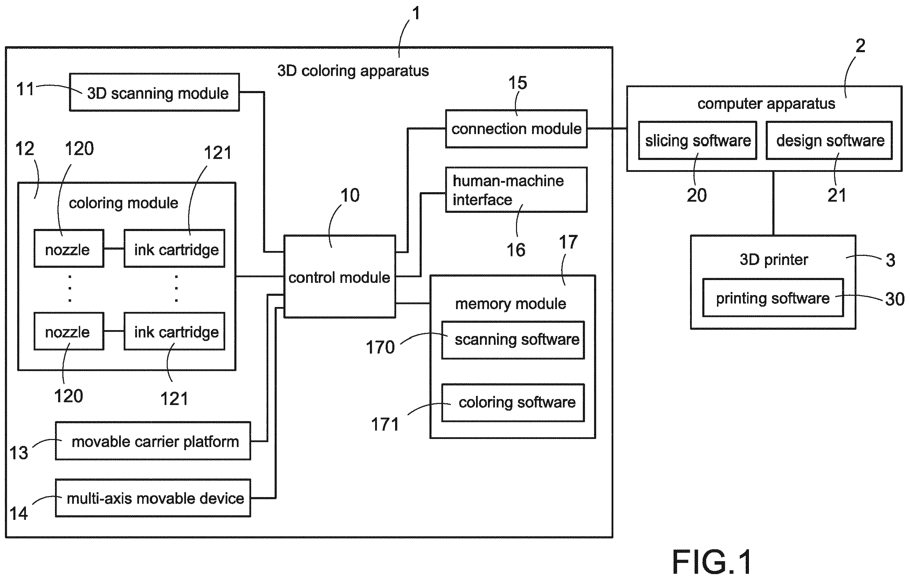

Please refer to Fig.1, which is an architecture diagram of a 3D printing coloring system according to one embodiment of the present disclosed example. The 3D printing coloring system of the present disclosed example mainly comprises a 3D coloring apparatus 1.

The 3D coloring apparatus 1 mainly comprises a 3D scanning module 11, a coloring module 12, a movable carrier platform 13 and a control module 10 electrically connected to above devices and configured to control the 3D coloring apparatus 1.

The 3D scanning module is configured to execute 3D scanning to a 3D physical model placed on the movable carrier platform 13 for generating scanning data. One of the exemplary embodiments, the 3D scanning module 11 may comprise an image capture module and a depth gauge (such as a laser range finder). The image capture module is configured to capture a 2D image of each of a plurality of viewing surfaces of a target object. The depth gauge is configured to measure the depth value of each position in the 2D image. Namely, the depth gauge measures each distance between each actual position corresponding to each pixel of each 2D image and the depth gauge. Then, the 3D scanning module 11 may execute process on each 2D image and the depth values of the 2D image for generating one point cloud data. Thus, the 3D scanning module 11 may execute above-mentioned capture and depth measuring operation on the different viewing surfaces of the target object for generating a plurality of point cloud data of the different viewing surfaces.

One of the exemplary embodiments, the point cloud data is a combination of 2D image and corresponding depth values, and the point cloud data may comprise a plurality of point data. Each point data corresponds to a coordinate, the coordinate is a multi-dimension coordinate (at least three-dimension coordinate). The coordinate records a plane position (X-axis coordinate value and Y-axis coordinate value) and the corresponding depth value (Z-axis coordinate value) of each point data in the point cloud data.

The coloring module 12 comprises at least one nozzle, Fig. 1 takes the multiple nozzles 120 for example. Each nozzle 120 is respectively connected to the different ink cartridge 121 respectively accommodated the different color (such as Cyan, Magenta, Yellow, and blacK) of inks.

The movable carrier platform 13 is configured for placing fixedly the 3D physical model to be colored, and has an ability of moving or rotating the 3D physical model by a driving device (such as a turntable driver) for changing a spatial position or a facing direction of the 3D physical model in 3D space. Thus, the 3D scanning module 11 may execute the 3D scanning to the different viewing surfaces of the 3D physical model, and the coloring module 12 may paint the different viewing surfaces of the 3D physical model.

One of the exemplary embodiments, the 3D coloring apparatus 1 further comprises a multi-axis movable device 14 (such as a mechanical arm or a multi-axis rotation device) electrically connected to the control module 10. The multi-axis movable device 14 may be connected to the 3D scanning module 11, the nozzle(s) 120 of the coloring module 12 and/or the movable carrier platform 13. The multi-axis movable device 14 may move or rotate the connected device in 3D space for changing a spatial position or a facing direction of the connected device.

One of the exemplary embodiments, the 3D coloring apparatus 1 further comprises a connection module 15 (such as USB module, PCI bus module, Wi-Fi module or Bluetooth module) electrically connected to the control module 10. The connection module 15 is configured to connect to the computer apparatus 2, and has an ability of data transmission and reception with the computer apparatus 2, such as sending the scanning data to the computer apparatus 2 or receiving the color distribution data from the computer apparatus 2.

One of the exemplary embodiments, the 3D coloring apparatus 1 further comprises a human-machine interface 16 (such as buttons, a monitor, indicators, a buzzer, or any combination of above elements) electrically connected to the control module 10. The human-machine interface 16 is configured to receive a user operation and output the scan-print-related information.

One of the exemplary embodiments, the 3D coloring apparatus 1 further comprises a memory module 17 electrically connected to the control module 10. The memory module 17 is configured to store data.

One of the exemplary embodiments, the memory module 17 comprises a non-transient computer-readable recording media, above non-transient computer-readable recording media stores a scanning software 170 (such as a firmware of the 3D scanning module 11) and a coloring software 171 (such as a firmware of the coloring module 12). A plurality of computer-executable codes is recorded in above-mentioned scanning software 170 and coloring software 171. The control module 10 may perform each scan-related steps of the automatically coloring method of each embodiment of the present disclosed example after execution of the scanning software 170. The control module 10 may perform each print-related steps of the automatically coloring method of each embodiment of the present disclosed example after execution of the coloring software 171.

One of the exemplary embodiments, a non-transient computer readable recording media of the computer apparatus 2 stores a design software 21. After the computer apparatus 2 executes the design software 21, the computer apparatus 2 may receive the scanning data from the 3D coloring apparatus 1, generate above-mentioned color distribution data according to the user operation, execute a process (such as a modeling process or a simulated coloring process) according to the color distribution data and the scanning data for generating the control data (such as data for controlling coloring or data for controlling carrier platform), and transfer the control data to the 3D coloring apparatus 1 for automatic coloring.

One of the exemplary embodiments, the computer apparatus 2 is further connected to a 3D printer 3, such as FDM 3D printer, SLA 3D printer or powder 3D printer, but this specific example is not intended to limit the scope of the present disclosed example. Moreover, the computer apparatus 2 stores a slicing software 20, the computer apparatus 2 may execute the slicing software 20 to execute a slicing process on the original object data for obtaining slice data (such as object slice data and color slice data), and transfer the slice data to the 3D printer 3 for manufacturing above-mentioned the 3D physical model of original color. Then, the use may fix the manufactured 3D physical model to the movable carrier platform 13 of the 3D coloring apparatus 1 for automatic coloring.

One of the exemplary embodiments, the 3D coloring apparatus 1 and the 3D printer 3 are arranged with integration in the same machine device. Thus, the integrated device may execute coloring automatically after completion of printing. Furthermore, the movable carrier platform 13 functions as a modeling platform for carrying the printing 3D physical model during 3D printing, and functions as a coloring platform for carrying the 3D physical model to be colored during 3D coloring.

One of the exemplary embodiments, the 3D coloring apparatus 1, the computer apparatus 2 and the 3D printer 3 are arranged with integration in the same machine device. Thus, the integrated device has the ability of completing all process (namely, the slicing process, the printing process and the coloring process) independently.

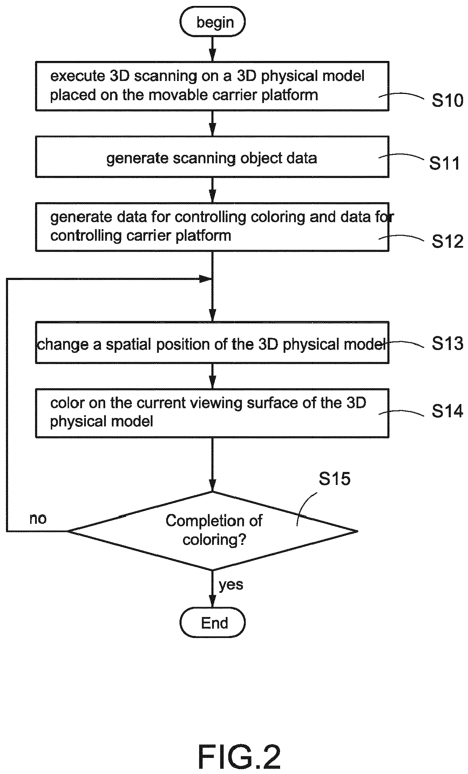

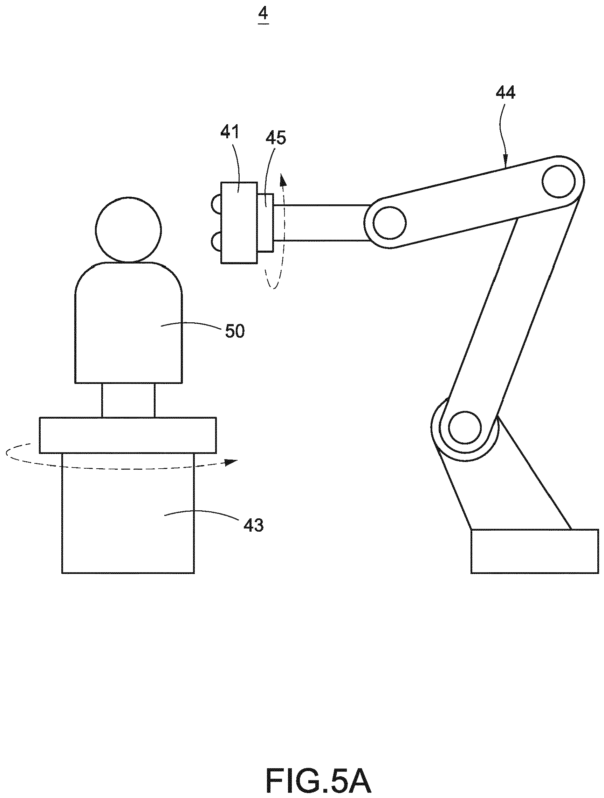

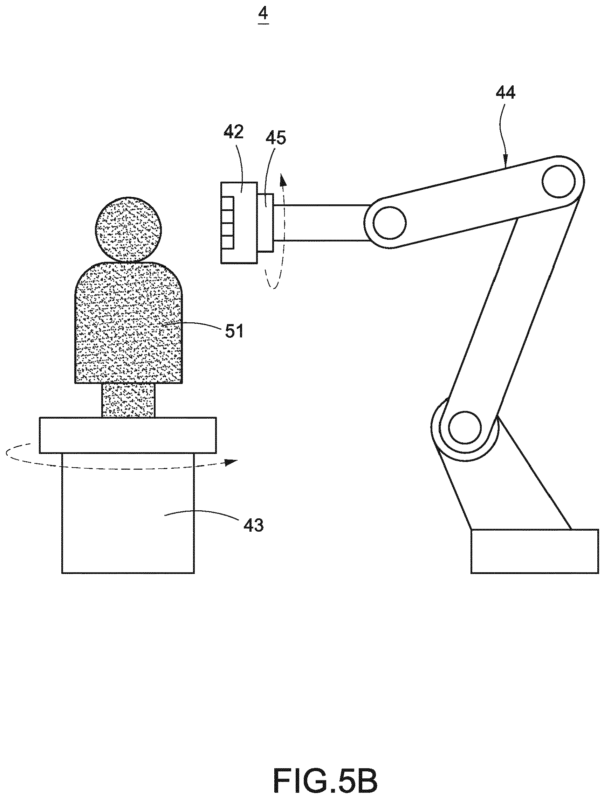

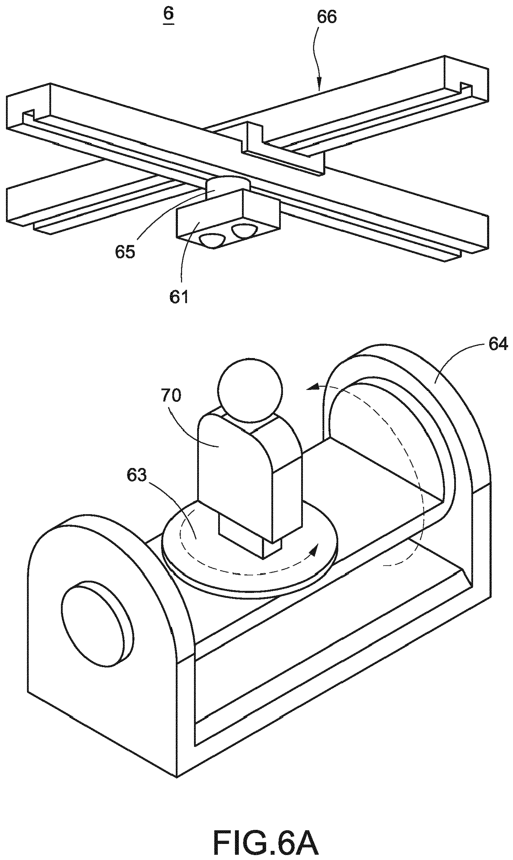

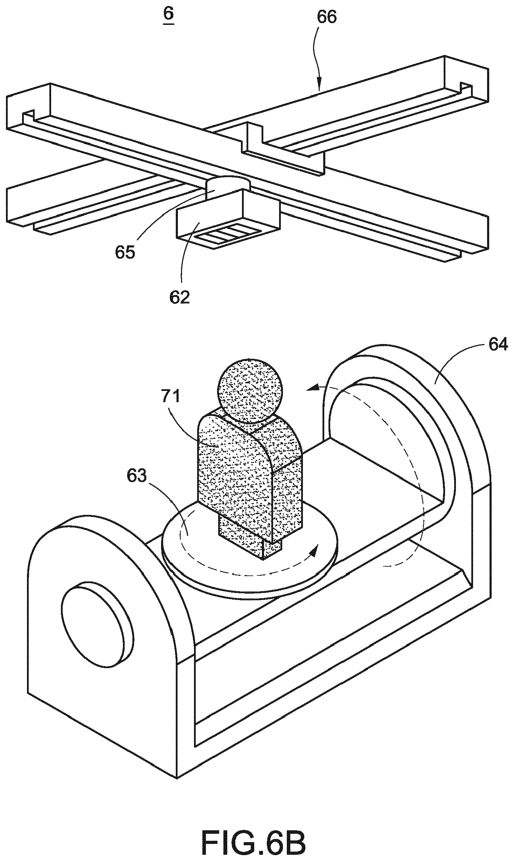

Please refer to Fig. 2, which is a flowchart of an automatically coloring method according to a first embodiment of the present disclosed example.; The automatically coloring method of each embodiment of the present disclosed example may be implemented by any of the 3D coloring apparatus 1 shown in Fig. 1, the 3D coloring apparatus 4 shown in Fig. 5A and Fig. 5B and the 3D coloring apparatus 6 shown in Fig. 6A and Fig. 6B. Following embodiments take the 3D coloring apparatus 1 shown in Fig. 1 for explain, but this specific example is not intended to limit the scope of the present disclosed example. The automatically coloring method of this embodiment comprises following steps.

Step S10: the control module 10 of the 3D coloring apparatus 1 controls the 3D scanning module 11 to execute a 3D scanning on a 3D physical model placed on the movable carrier platform 13 for generating the scanning data. One of the exemplary embodiments, the 3D scanning module 11 is configured to capture each image of each of a plurality of viewing surfaces of the 3D physical model and generate each point cloud data of each viewing surface as the scanning data.

Step S11: the control module 10 executes a modeling process according to the scanning data for generating the scanning object data. Above-mentioned is configured to describe a shape of a 3D virtual object, the 3D virtual object corresponds to the 3D physical model scanned previously.

One of the exemplary embodiments, the control module 10 may transfer the scanning data generated in the step S10 to the computer apparatus 2 via the connection module 15, the computer apparatus 2 may execute the modeling process on the scanning data for generating above-mentioned scanning object data after execution of the design software 21.

Step S12: the control module 10 retrieves the color distribution data, and generates data for controlling coloring and data for controlling carrier platform according to the color distribution data and the scanning object data. The data for controlling coloring is configured for controlling the control module 12, and the data for controlling carrier platform is configured for control the movable carrier platform 13. above-mentioned color distribution data is configured to describe a color of each of the different positions of the 3D virtual object.

One of the exemplary embodiments, the data for controlling coloring and the data for controlling carrier platform are associated with each other. For example, the data for controlling coloring may record a color distribution (such as using a color 2D image) of each viewing surface of the 3D physical model. Moreover, the data for controlling carrier platform may record each carrier platform coordinate of the movable carrier platform 13 respectively corresponding to each viewing surface of the 3D physical model.

One of the exemplary embodiments, the user may operate the computer apparatus 2 to execute the design software 21, and configure the color of each of the different positions on the 3D virtual object manually by the design software 21 for generating above-mentioned color distribution data.

One of the exemplary embodiments, the user may operate the computer apparatus 2 to execute the slicing software 20 to execute a slicing process on original object data used to manufacture the 3D physical model for generating slice data (such as object slice data and color slice data), and execute the design software 21 to generate the data for controlling coloring and the data for controlling carrier platform according to the slice data. For example, the color slice data may be configured as the color distribution data.

Step S13: the control module 10 controls the movable carrier platform 13 to rotate the 3D physical model according to the data for controlling carrier platform. One of the exemplary embodiments, a coordinate encoder is arranged in the movable carrier platform 13 and configured to sense the current carrier platform coordinate (such as a rotation angle or motion distance). Moreover, a coloring order between the viewing surfaces of the 3D physical model may be configured. The control module 10 may select one of the viewing surfaces according to the coloring order (such as selecting the first viewing surface), and control the movable carrier platform 13 to change (such as changing by rotation or motion) a spatial position in the 3D space of the 3D physical model for making the first viewing surface of the 3D physical model face the control module 12 according to the carrier platform coordinate (such as the first carrier platform coordinate) of the data for controlling carrier platform. The first carrier platform coordinate corresponds to the first viewing surface.

Please be noted that although this embodiment takes rotating the 3D physical model for example, but this specific example is not intended to limit the scope of the present disclosed example. In another embodiment (such as the embodiment shown in Fig. 6A and Fig. 6B), the 3D coloring apparatus 6 may change the spatial position of the 3D physical model by multi-axial rotation or multi-axial motion.

Step S14: the control module 10 controls the coloring module 12 to color the 3D physical model on the movable carrier platform 13 according to the data for controlling coloring. One of the exemplary embodiments, the control module 10 may retrieve a color distribution of the same viewing surface (such as the color 2D image of the first viewing surface) of the data for controlling coloring, and control the nozzles 120 of the coloring module 12 respectively to use inks of the different colors of ink cartridge 121 to paint the first viewing surface of the 3D physical model. Thus, the 3D coloring apparatus 1 can complete the automatic coloring of the first viewing surface of the 3D physical model.

Step S15: the control module 10 determines whether completion of coloring the 3D physical model, such as determining whether all of the viewing surfaces of the 3D physical model have been colored.

If the control module 10 determines that the 3D physical model has been colored, finishes the coloring process. Otherwise, the control module 10 performs the step S13 and the step S14 again for coloring another viewing surface (such as the second viewing surface) of the 3D physical model.

For example, the control module 10 may select the second viewing surface, and control the movable carrier platform 13 to rotate or move for making the second viewing surface of the 3D physical model face the coloring module 12 according to the second carrier platform coordinate of the data for controlling carrier platform. The second carrier platform coordinate corresponds to the second viewing surface. Then, the control module 10 may control the nozzles 120 of the coloring module 12 to paint the second viewing surface of the 3D physical model according to the color 2D image corresponding to the second viewing surface of the data for controlling coloring. Thus, the 3D coloring apparatus 1 can complete the automatic coloring of the second viewing surface of the 3D physical model, and so on.

The present disclosed example can automatically execute a coloring process on the 3D physical model and can achieve that replacing the artificial coloring with automatic coloring.

Please refer to Fig. 5A and Fig. 5B simultaneously, Fig. 5A is a schematic view of 3D scanning according to a first aspect of the present disclosed example, and Fig. 5B is a schematic view of 3D coloring according to a first aspect of the present disclosed example. Fig. 5A and Fig. 5B are used to exemplary explain one implement aspect of the 3D coloring apparatus of the present disclosed example.

In this example, the 3D coloring apparatus 4 comprises a structure for mounting and unmounting 45. The structure for mounting and unmounting 45 is arranged in the multi-axis movable device 44 (take four-axis mechanical arm for example), and configured to be replaceable to mount/unmount the 3D scanning module 41 and the coloring module 42. Moreover, in this example, the movable carrier platform 43 may be controlled to rotate horizontally the 3D physical model 50 for making the different viewing surfaces of the 3D physical model respectively face the 3D scanning module 41 and the coloring module 42.

As shown in Fig. 5A, when execution of the 3D scanning, the user may mount the 3D scanning module 41 on the multi-axis movable device 44 by the structure for mounting and unmounting 41. Then, the 3D coloring apparatus 4 may control the movable carrier platform 43 to horizontally rotate the 3D physical model 50, control the 3D scanning module 41 and the multi-axis movable device 44 synergistically executing the 3D scanning on each viewing surface of the 3D physical model 50 during rotation for generating the scanning data, and generate the data for controlling coloring and data for controlling carrier platform according to the scanning data and the color distribution data.

Then, as shown in Fig. 5B, when execution of coloring, the user may unmount the 3D scanning module 41 from the multi-axis movable device 44, and mount the coloring module 42 (the coloring module 42 comprises the nozzles and ink cartridges in this example) on the multi-axis movable device 44 by the structure for mounting and unmounting 45. Then, the 3D coloring apparatus 4 may control the movable carrier platform 43 to horizontally rotate the 3D physical model 50 according to the data for controlling carrier platform, and control the coloring module 42 and the multi-axis movable device 44 to synergistically color each of the viewing surfaces of the 3D physical model 50 according to the data for controlling coloring for generating the color 3D physical model 51.

The present disclosed example can effectively expand the scannable range and colorable range via arranging the 3D scanning module 41 and the coloring module 42 on the multi-axis movable device 44, and improve an accuracy of the generated scanning data and a color quality.

The multi-axis rotation makes the 3D physical model 50 contact the forces of the different directions simultaneously, such as the gravity
and the centrifugal force of the different directions. Compare to the multi-axis rotation, the present disclosed example can effectively reduce the forces contacting the 3D physical model 50 during rotation via configuring the movable carrier platform 43 to horizontally rotation (single axis rotation), and reduce a probability of the 3D physical model 50 being damaged caused by rotation.

Please refer to Fig. 6A and Fig. 6B simultaneously, Fig. 6A is a schematic view of 3D scanning according to a second aspect of the present disclosed example, and Fig. 6B is a schematic view of 3D coloring according to a second aspect of the present disclosed example. Fig. 6A and Fig. 6B are used to exemplary explain another implement aspect of the 3D coloring apparatus of the present disclosed example.

In this example, the 3D coloring apparatus 6 comprises a structure for mounting and unmounting 65 and a simple moving module 66. The structure for mounting and unmounting 65 is arranged on the simple moving module 66 (take a track moving device for example), and is configured to be replaceable to mount/unmount the 3D scanning module 61 and the coloring module 62. The simple moving module 66 is arranged upon the movable carrier platform 63, and the 3D scanning module 61 and the coloring module 62 is arranged by facing down (namely scanning and coloring down).

Moreover, in this example, the movable carrier platform 63 is arranged in the multi-axis movable device 64 (take a double axis rotating device for example, the double axis rotating device may comprise two rotating devices for rotating in the two different axes), so as to be controlled to execute multi-axis rotation for making the different viewing surfaces of the 3D physical model 70 respectively face up. Namely, the different viewing surface respectively face the 3D scanning module 61 and the coloring module 62.

As shown in Fig. 6A, when execution of the 3D scanning, the user may mount the 3D scanning module 61 on the simple moving module 66 by the structure for mounting and unmounting 65. Then, the 3D coloring apparatus 6 may control the multi-axis movable device 64 to rotate movable carrier platform 63 for rotating the 3D physical model 70 in the 3D space, control the 3D scanning module 41 and the simple moving module 66 synergistically executing the 3D scanning on each viewing surface of the 3D physical model 70 during rotation for generating the scanning data, and generate the data for controlling coloring and data for controlling carrier platform according to the scanning data and the color distribution data.

Then, as shown in Fig. 6B, when execution of coloring, the user may unmount the 3D scanning module 61 from the simple moving module 66, and mount the coloring module 62 (the coloring module 62 comprises the nozzles and ink cartridges in this example) on the simple moving module 66 by the structure for mounting and unmounting 65. Then, the 3D coloring apparatus 6 may control the multi-axis movable device 64 to rotate the 3D physical model 70 in the 3D space according to the data for controlling carrier platform, and control the coloring module 62 and the simple moving module 66 to synergistically color each of the viewing surfaces of the 3D physical model 70 (such as jetting inks down) according to the data for controlling coloring for generating the color 3D physical model 71.

The present disclosed example can effectively reduce the space needed for coloring via arranging the multi-axis movable device 64 on the movable carrier platform 63 and use of multi-axis rotation, and reduce the volume of the 3D coloring system 6.

The present disclosed example can effectively reduce the scanning error caused by moving the 3D scanning module 61 and the ink jetting error caused by gravity via fixedly facing down to execute the 3D scanning and jetting inks, and improve the accuracy of the generated scanning data and the color quality data.

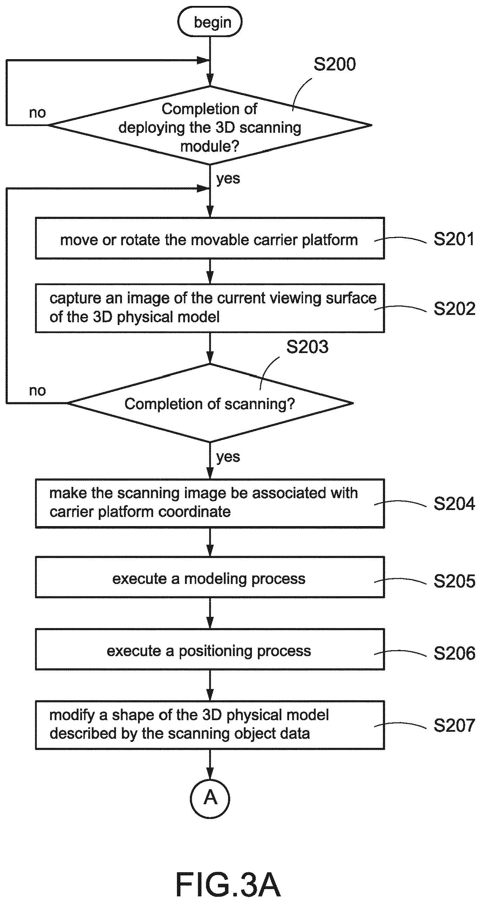

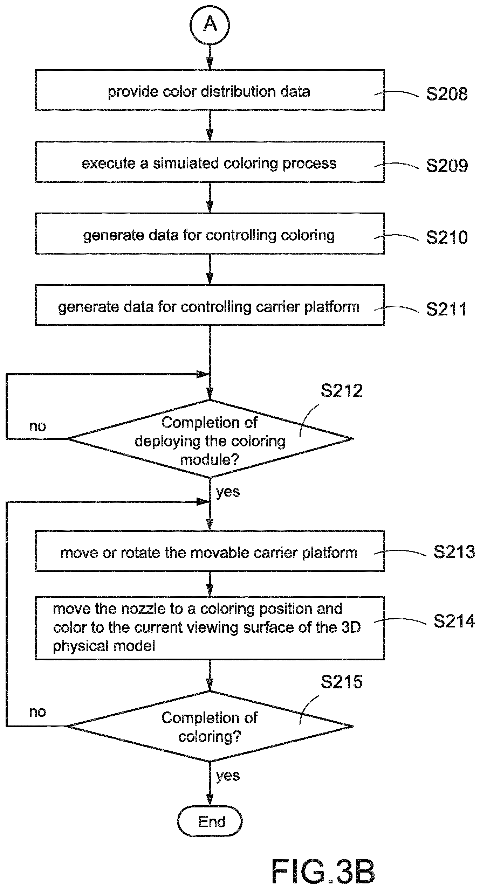

Please refer to Fig. 3A and Fig. 3B simultaneously, Fig. 3A is a first part of a flowchart of an automatically coloring method according to a second embodiment of the present disclosed example, and Fig. 3B is a second part of a flowchart of an automatically coloring method according to a second embodiment of the present disclosed example. The automatically coloring method of each embodiment of the present disclosed example may be implemented by any of the 3D coloring apparatus 1 shown in Fig. 1, the 3D coloring apparatus 4 shown in Fig. 5A and Fig. 5B and the 3D coloring apparatus 6 shown in Fig. 6A and Fig. 6B. Following embodiments take the 3D coloring apparatus 1 shown in Fig. 1 for explain, but this specific example is not intended to limit the scope of the present disclosed example.

After the user fixes the 3D physical model to be colored on the movable carrier platform 13, the user may operate the 3D coloring apparatus 1 to execute the scanning software 170 to perform following steps.

Step S200: the control module 10 of the 3D coloring apparatus 1 determines whether the 3D scanning module 11 has been deployed. For example, the control module 10 may send a test signal to the 3D scanning module 11 for testing whether the 3D scanning module is ready for scanning.

If the control module 10 determines that the 3D scanning module 11 do not be arranged completely, the control module 10 performs the step S200 again for continuous detection. The control module 10 may further issue an alert for reminding the user to arrange the 3D scanning module 11. If the control module 10 determines that the 3D scanning module 11 has been arranged completely, the control module 10 performs the step S201.

Step S201: the control module 10 controls the movable carrier platform 13 to rotate along a default scanning route.

One of the exemplary embodiments, above-mentioned scanning route comprises a plurality of ordered carrier platform coordinates, the carrier platform coordinates respectively correspond to the viewing surfaces of the 3D physical model. The control module 10 controls the movable carrier platform 13 to move or rotate to the first carrier platform coordinate for making the first viewing surface of the 3D physical model face the 3D scanning module 11.

One of the exemplary embodiments, the movable carrier platform 13 is arranged on the multi-axis movable device 14, so as to be rotated in multiple axes space (as shown in Fig. 6A). Each carrier platform coordinate of above-mentioned scanning route may record each operating angle of each axis. Moreover, the control module 10 is configured to control a plurality of rotating devices of the multi-axis movable device 14 to respectively rotate the corresponding operating angle for achieving the effect of rotating the movable carrier platform 13.

Step S202: the control module 10 controls the 3D scanning module 11 to execute 3D scanning on the current viewing surface (such as the first viewing surface) of the 3D physical model on the movable carrier platform 13 for obtaining a 2D image and the corresponding depth values, and generates the first point cloud data according to this 2D image and the corresponding depth values.

Step S203: the control module 10 determines whether completion of 3D scanning, such as determining whether all of the viewing surfaces of the 3D physical model have been 3D scanned.

One of the exemplary embodiments, the control module 10 determines the completion of 3D scanning when the completion of the movable carrier platform 13 rotating along the scanning route.

If the control module 10 determines incompletion of 3D scanning, the control module 10 performs the step S201 and the step S202 again for executing 3D scanning on the next viewing surface of the 3D physical model. For example, the control module 10 may control the movable carrier platform 13 to rotate to the second carrier platform coordinate for making the second viewing surface of the 3D physical model face the 3D scanning module 11, and control the 3D scanning module 11 to execute 3D scanning on the second viewing surface of the 3D physical model for generating the second point cloud data, and so on.

If the control module 10 determines completion of 3D scanning, the control module 10 performs a step S204. Step S204: the control module 10 respectively associates each of the plurality of point cloud data with each of the carrier platform coordinates, and making the plurality of associated point cloud data and the associated carrier platform coordinates of the movable carrier platform 13 as the scanning data. Each of the associated carrier platform coordinates is that the movable carrier platform 13 is located at when capturing each point cloud data.

Then, the 3D coloring apparatus may transfer the scanning data to the computer apparatus 2 for execution of a process for generating model, or the 3D coloring apparatus 1 directly executes the process for generating model (take the 3D coloring apparatus 1 executing the process for generating model for example in following description). More specifically, the process for generating model comprises following steps.

Step S205: the control module 10 executes a modeling process according to the scanning data for generating the scanning object data. Above-mentioned scanning object data is configured to describe a shape of a 3D virtual object, the shape of the 3D virtual object corresponds (such as same or similar) to the shape of the 3D physical model.

Above-mentioned generating the scanning object data according to the scanning data (the scanning data may comprise a plurality of point cloud data) are the common techniques in the technical field of 3D modeling, the relevant description is omitted for brevity.

Step S206: the control module 10 executes a positioning process on the generated scanning object data for establishing a model-carrier-platform corresponding relationship. Above-mentioned model-carrier-platform corresponding relationship comprise a plurality of corresponding relationships between the viewing surfaces of the 3D physical model and a plurality of carrier platform coordinates of the movable carrier platform 13.

More specifically, because each of the plurality of point cloud data has been associated with one carrier platform coordinate in the scanning data, the control module 10 may associate the viewing surface of the 3D virtual object corresponding to each point cloud data with the corresponding carrier platform coordinate after execution of modeling process (step S205).

Thus, the control module 10 may establish above-mentioned model-carrier-platform corresponding relationship, and control the movable carrier platform 13 to rotate according to the model-carrier-platform corresponding relationship for making the designated viewing surface of the 3D physical model face the coloring module 12 (described later).

Step S207: the control module 10 retrieves the shape information of the original object data or the object slice data, and modifies the scanning object data according to the retrieved data for modifying the shape of the 3D virtual object. Namely, the control module 10 modifies the shape of the 3D physical model described by the scanning object data.

Above-mentioned original object data and the object slice data are used to print the 3D physical model. More specifically, the original object data is configured for describing the 3D virtual object. The user may operate the computer apparatus 2 to execute the slicing software 20 to execute the slicing process for objects on the shape information of the original object data to generate the multiple layers of object slice data (namely, dividing the 3D virtual object into multiple layers of slice virtual objects), and transfer the generated object slice data to the 3D printer 3 for execution of 3D printing and manufacturing above-mentioned 3D physical model.

One of the exemplary embodiments, the control module 10 first detects any defect on the appearance of the 3D virtual object (the defect corresponds the part which unable to model or modeling error caused by missing or error of the 3D scanning), and fixes the defect according to the original object data or the object slice data (such as fixing according to the shape of the original 3D virtual object).

Thus, the present disclosed example can effective repair the data defect caused by missing or error of 3D scanning, increase the similarity between the 3D virtual object and the 3D physical model, and improve the quality of 3D coloring.

Another of the exemplary embodiments, the control module 10 may reduce the times of execution of 3D scanning relatively via performing the step S207. For example, the control module 10 may simplify the scanning route or reduce the number of viewing surfaces to be scanned. The control module 10 may compare the scanning object data generated by fewer times of execution of 3D scanning with any of the shape information of the original object data and the object slice data. And after comparison, the control module 10 may replace all or part of the scanning object data with the shape information of the original object data or the object slice data, and/or modify the all or part of the scanning object data with the shape information of the original object data or the object slice data. Finally, the control module 10 may make the replaced/modified scanning object data as the shape of the 3D virtual object, so as to express the shape of the 3D physical model.

Then, the computer apparatus 2 may execute the design software 21 to generate the control data, or the 3D coloring apparatus 1 may execute the design software 21 (if the design software 21 is stored in the memory 17 of the 3D coloring apparatus 1) to generate the control data (take the computer apparatus 2 executing the design software 21 for example in following description). More specifically, following steps are performed when the design software 21 is executed.

Step S208: the computer apparatus 2 retrieves the color distribution data. Above-mentioned color distribution data is configured for describing a color of each of the different positions of the 3D virtual object.

One of the exemplary embodiments, the color distribution data comprises the color information of above-mentioned original object data or the color slice data (such as a plurality of color 2D image). More specifically, the user may operate the computer apparatus 2 to execute the slicing software 20 to execute slicing process for colors on the color information of the original object data for generating the color slice data.

One of the exemplary embodiments, the user may operate the computer apparatus 2 to configure the color of each part of the 3D virtual object via execution of the design software 21. After configuration of colors, the executed design software 21 may generate the corresponding color distribution data.

Step S209: the computer apparatus 2 executes a simulated coloring process on the scanning object data according to the color distribution data for generating the color object data. Above-mentioned color object data is configured for describing the colored 3D virtual object.

One of the exemplary embodiments, above-mentioned color distribution data comprises a plurality of color 2D images, the simulated coloring process is configured to paste the color 2D image up on the surfaces of the 3D virtual object for generating the colored 3D virtual object.

One of the exemplary embodiments, above-mentioned color distribution data comprises the color values (such as color code) of each part of the 3D virtual object. The simulated coloring process is configured to paint each part of the 3D virtual object according to the corresponding color value for generating the colored 3D virtual object.

Step S210: the computer apparatus 2 generates the data for controlling coloring according to the color information of the color object data. One of the exemplary embodiments, the data for controlling coloring comprises a plurality of color 2D images, the color 2D images respectively correspond to the viewing surfaces of the 3D physical model.

Step S211: the computer apparatus 2 generates the data for controlling carrier platform according to the coloring order between the viewing surfaces of the 3D physical model (such as a painting order of the color 2D images) and the model-carrier-platform corresponding relationship.

One of the exemplary embodiments, the data for controlling carrier platform comprises route for carrier platform. More specifically, the computer apparatus 2 retrieves the carrier platform coordinates corresponding to the viewing surfaces of the 3D physical model, and arranges the carrier platform coordinates according to the coloring order for obtaining the route for carrier platform.

Then, the computer apparatus 2 may transfer the control data (namely, the data for controlling coloring and the data for controlling carrier platform) to the 3D coloring apparatus 1 (if the design software 21 is executed in the computer apparatus 2), the 3D coloring apparatus 1 executes the coloring software 171 to perform following steps.

Step S212: the control module 10 determines whether completion of deploying the coloring module 12. For example, the control module 10 may send a test signal to the coloring module 12 for testing whether the coloring module 12 is ready for coloring.

If the control module 10 determines that the coloring module 12 do not be arranged completely, the control module 10 performs the step S212 again for continuous detection. The control module 10 may further issue an alert for reminding the user to arrange the coloring module 12. If the control module determines that the coloring module 12 has been arranged completely, the control module 10 performs the step S213.

Step S213: the control module 10 controls the movable carrier platform 13 to rotate the 3D physical model according to the data for controlling carrier platform. One of the exemplary embodiments, the control module 10 controls the movable carrier platform 13 to rotate to one of the carrier platform coordinates (such as the first carrier platform coordinate) of the route for carrier platform for making the first viewing surface of the 3D physical model face the coloring module 12.

One of the exemplary embodiments, if the movable carrier platform 13 is arranged on the multi-axis movable device 14 (as shown in Fig. 6B), the data for controlling carrier platform may comprise above-mentioned route for carrier platform. The control module 10 may control the movable carrier platform 13 to move or rotate to the designated carrier platform coordinate along the route for carrier platform in the 3D space via the multi-axis movable device 14 for making the designated viewing surface of the 3D physical model face the coloring module 12.

One of the exemplary embodiments, each of above-mentioned carrier platform coordinates records a plurality of operating angles used for controlling the rotating devices of the multi-axis movable device 14, the control module 10 controls the rotating devices of the multi-axis movable device 14 to respectively rotate according to the operating angles of each carrier platform coordinate for making each viewing surface of the 3D physical model face the coloring module 12.

Step S214: the control module 10 controls the coloring module 12 to move to a coloring position according to the data for controlling coloring, and colors the 3D physical model placed on the movable carrier platform 13.

One of the exemplary embodiments, if the coloring module 12 is arranged on the multi-axis movable device 14 (as shown in Fig. 5B), the data for controlling coloring may comprise a plurality of routes for coloring module and a plurality of inkjet data respectively corresponding to the viewing surfaces of the 3D physical model. The control module 10 may control the multi-axis movable device 14 to move the coloring module 12 to the coloring position along the route for coloring module corresponding to the current viewing surface in the 3D space, and control the coloring module 12 to jet inks on the current viewing surface of the 3D physical model according to the inkjet data corresponding to the current viewing surface.

Step S215: the control module 10 determines whether completion of coloring the 3D physical model. If the control module 10 determines completion of coloring the 3D physical model, the control module 10 finishes the coloring process. Otherwise, the control module 10 performs the step S213 and the step S214 again for coloring another viewing surface (such as the second viewing surface) of the 3D physical model.

The present disclosed example can effectively improve the accuracy of result data of 3D scanning via modifying the scanning data according to the data for printing the 3D physical model, and further improve the quality of coloring.

Please be noted that, if the 3D scanning module 11 and the coloring module 12 are fixedly arranged on the 3D coloring apparatus 1 and unable to be unmounted, the step S200 and the step S212 may not be executed.

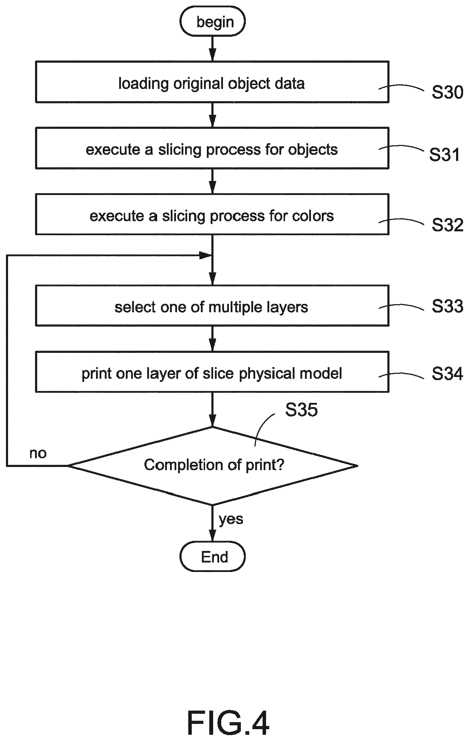

Please refer to Fig. 4, which is a flowchart of slicing process and 3D printing according to a third embodiment of the present disclosed example. The present disclosed example may manufacture a 3D physical model by the computer apparatus 2 and the 3D printer 3, and color the 3D physical model by the 3D coloring apparatus 1. The automatically coloring method of this embodiment comprises following steps for implementing the slicing process and 3D printing.

Step S30: the computer apparatus 2 loads one original object data form its memory when the execution of the slicing software 20. Above-mentioned original object data is used to express a color original 3D virtual object, and records shape information (coordinate of each vertex of the original 3D virtual object or shape of the original 3D virtual object) and color information (such as the color value of each part of the original 3D virtual object) of the original 3D virtual object.

Step S31: the computer apparatus 2 executes a slicing process for objects on the shape information of the original object data for generating multiple layers of object slice data. Above-mentioned each layer of object slice data respectively comprises a layer number sorted by order, and is used to respectively express the outline of each layer of the slice virtual object generated by dividing the original 3D virtual object.

One of the exemplary embodiments, each layer of object slice data may be a 2D image used to express the outline of each layer of slice virtual object if the 3D printer 3 is a stereolithography 3D printer.

One of the exemplary embodiments, each layer of object slice data (such as a section of G-codes) may be a section of printing route used to express the outline of each layer of slice virtual object if the 3D printer 3 is an FDM (Fused Deposition Modeling) 3D printer.

Step S32: the computer apparatus 2 executes a slicing process for colors on the color information of the original object data for generating multiple layers of color slice data (such as color 2D images). Above-mentioned each layer of color slice data comprises a layer number sorted by order, and is used to respectively express the color of each layer of the slice virtual object generated by dividing the original 3D virtual object.

Then, the computer apparatus 2 may transfer the object slice data to the 3D printer 3 for printing the 3D physical model, and transfer the color slice data to the 3D coloring apparatus 1 for coloring the 3D physical model.

Step S33: the 3D printer 3 selects one of the multiple layers of the object slice data in order (such as the first layer of object slice data) when the execution of the printing software 30.

Step S34: the 3D printer 3 prints one layer of slice physical model according to the selected one layer of the object slice data.

Step S36: the 3D printer 3 determines whether is the next layer of slice physical model having to be printed. Namely, 3D printer 3 determines whether the completion of printing. More specifically, the 3D printer 3 may determine whether the printing had been completed according to the layer number of the currently selected layer of object slice data. Namely, the 3D printer 3 determines whether the currently selected layer of object slice data is the last layer of object slice data.

If the currently selected layer of object slice data is the last layer of object slice data, the 3D printer 3 determines completion of printing, and finishes the procedure of 3D printing. Then, the 3D printer 3 performs the step S33 and the step 34 again for printing the next layer of slice physical model.

For example, the 3D print 3 selects the second layer of object slice data, and prints the second layer of slice physical model on the first layer of slice physical model, and so on. Thus, the 3D printer 3 may stack the multiple layers of slice physical models as the 3D physical model.

## Claims

1. An automatically coloring method for 3D physical model, the automatically coloring method for 3D physical model being applied to a 3D coloring apparatus (1, 4, 6), the 3D coloring apparatus (1, 4, 6) comprising a 3D scanning module (11, 41, 61), a coloring module (12, 42, 62) and a movable carrier platform (13, 43, 63), the automatically coloring method for 3D physical model comprising following steps:
a) controlling the 3D scanning module (11, 41, 61) to execute 3D scanning on a 3D physical model (50, 70) placed on the movable carrier platform (13, 43, 63) for generating scanning data;
b) generating scanning object data used to describe a shape of a 3D virtual object according to the scanning object data, wherein the 3D virtual object corresponds to the 3D physical model (50,70);
c) generating data for controlling coloring and data for controlling carrier platform associated with each other according to color distribution data and the scanning object data; and
d) controlling the movable carrier platform (13, 43, 63) to change a spatial position of the 3D physical model (50, 70) according to the data for controlling carrier platform, and controlling the coloring module (12, 42, 62) to color a plurality of viewing surfaces of the 3D physical model (50, 70) according to the data for controlling coloring.

2. The automatically coloring method for 3D physical model according to claim 1, wherein the step a) comprises following steps:
a1) controlling the movable carrier platform (13, 43, 63) to rotate along a scanning route;
a2) controlling the 3D scanning module (11, 41, 61) to capture images of the viewing surfaces of the 3D physical model (50, 70) for obtaining a plurality of point cloud data during rotating the movable carrier platform (13, 43, 63); and
a3) making each point cloud data be associated with each carrier platform coordinate of the movable carrier platform (13, 43, 63) which the movable carrier platform (13, 43, 63) is located at when capturing each point cloud data, and making associated data as the scanning data.

3. The automatically coloring method for 3D physical model according to claim 1, wherein the step b) comprises following steps:
b1) executing a modeling process according to the scanning data for generating the scanning object data;
b2) executing a positioning process on the scanning object data for establishing a model-carrier-platform corresponding relationship between the viewing surfaces of the 3D physical model (50, 70) and a plurality of carrier platform coordinates of the movable carrier platform (13, 43, 63); and
b3) modifying the scanning object data according to shape information of original object data used to print the 3D physical model (50, 70) or object slice data for modifying a shape of the 3D virtual object described by the scanning object data.

4. The automatically coloring method for 3D physical model according to claim 1, wherein the color distribution data comprises color information of original object data or color slice data;
the step c) comprises following steps:
c1) executing a simulated coloring process on the scanning object data according to the color distribution data for generating color object data corresponding to the colored 3D virtual object; and
c2) generating the data for controlling coloring according to color information of color object data.

5. The automatically coloring method for 3D physical model according to claim 4, wherein the step c) further comprises following steps:
c3) generating the data for controlling carrier platform according to a coloring order between the viewing surfaces of the 3D physical model (50, 70) and a model-carrier-platform corresponding relationship between the viewing surfaces of the 3D physical model (50, 70) and a plurality of carrier platform coordinates of the movable carrier platform (13, 43, 63).

6. The automatically coloring method for 3D physical model according to claim 4, further comprising following steps before the step a):
e1) execute a slicing process for objects on shape information of the original object data for generating multiple layers of object slice data; and
e2) controlling a 3D printer (3) to print multiple layers of slice physical models layer by layer according to the multiple layers of object slice data, and stacking the multiple layers of slice physical models to be the 3D physical model (50, 70).

7. The automatically coloring method for 3D physical model according to claim 1, wherein the 3D coloring apparatus (1, 4, 6) further comprises a structure for mounting and unmounting (45, 65), the structure for mounting and unmounting (45, 65) is configured to be replaceable to mount and unmount the coloring module (12, 42, 62) and the 3D scanning module (11, 41, 61); the step a) is configured to execute the 3D scanning when the structure for mounting and unmounting (45, 65) mounts the 3D scanning module (11, 41, 61); the step d) is configured to control the movable carrier platform (13, 43, 63) to change the spatial position of the 3D physical model (50, 70) and control the coloring module (12, 42, 62) to color the viewing surfaces of the 3D physical model (50, 70) when the structure for mounting and unmounting (45, 65) mounts the coloring module (12, 42, 62).

8. The automatically coloring method for 3D physical model according to claim 1, wherein the 3D coloring apparatus (1, 4, 6) further comprises a multi-axis movable device (14, 44, 64), the coloring module (12, 42, 62) is arranged on the multi-axis movable device (14, 44, 64), the data for controlling coloring comprises a plurality of routes for coloring module and a plurality of inkjet data respectively corresponding to the viewing surfaces of the 3D physical model (50, 70);
the step d) is configured to control the movable carrier platform (13, 43, 63) to rotate horizontally the 3D physical model (50, 70) according to the data for controlling carrier platform for facing each viewing surface, control the multi-axis movable device (14, 44, 64) to move the coloring module (12, 42, 62) along each route for coloring module corresponding to the current viewing surface in 3D space, and control the coloring module (12, 42, 62) to jet inks on the current viewing surface of the 3D physical model (50, 70) according to the inkjet data corresponding to the current viewing surface.

9. The automatically coloring method for 3D physical model according to claim 1, wherein the 3D coloring apparatus (1, 4, 6) further comprises a multi-axis movable device (14, 44, 64), the movable carrier platform (13, 43, 63) is arranged on the multi-axis movable device (14, 44, 64), the data for controlling carrier platform comprises route for carrier platform, the route for carrier platform is configured to be through a plurality of carrier platform coordinates respectively corresponding to the viewing surfaces of the 3D physical model (50, 70), the data for controlling coloring comprises a plurality of inkjet data respectively corresponding to the viewing surfaces of the 3D physical model (50, 70);
the step d) is configured to control the movable carrier platform (13, 43, 63) to move or rotate the 3D physical model (50, 70) along each route for carrier platform for facing each viewing surface in 3D space, and control the coloring module (12, 42, 62) to coloring the current viewing surface of the 3D physical model (50, 70).

10. The automatically coloring method for 3D physical model according to claim 9, wherein each of the carrier platform coordinates records a plurality of operating angles, the coloring module is arranged upon the movable carrier platform (13, 43, 63);
the step d) is configured to control a plurality of rotating devices of the multi-axis movable device (14, 44, 64) to rotate according to the operating angles of each of the carrier platform coordinates for making each viewing surface of the 3D physical model (50, 70) face up in order, and control the coloring module (12, 42, 62) to jet inks down to the current viewing surface of the 3D physical model (50, 70) according to the data for controlling coloring.

11. The automatically coloring method for 3D physical model according to claim 1, wherein the data for controlling coloring comprises a plurality of color 2D images respectively corresponding to the viewing surfaces of the 3D physical model (50, 70), the step d) is configured to control the coloring module (12, 42, 62) to jet inks to the current viewing surface of the 3D physical model (50, 70) according to the color 2D image corresponding to the current viewing surface.

12. The automatically coloring method for 3D physical model according to claim 1, further comprising following steps before the step a):
f1) executing a slicing process for objects on shape information of original object data for generating multiple layers of object slice data;
f2) executing a slicing process for colors on color information of the original object data for generating multiple layers of color slice data; and
f3) controlling a 3D printer (3) to print multiple layers of slice physical models layer by layer according to the multiple layers of object slice data, and stacking the multiple layers of slice physical models to be the 3D physical model (50, 70).
